# FASCICULE DE BREVET EUROPEEN

(11) **EP 2 707 332 B1**
(45) Date de publication et mention de la délivrance du brevet: **29.07.2015**
(21) Numéro de dépôt: 12722892.2
(22) Date de dépôt: 03.05.2012
(51) Int. Cl.: B03D 1/14, C02F 1/24

(54) **DISPOSITIF DE FLOTTATION RAPIDE D'EAUX CHARGÉES EN MATIÈRES EN SUSPENSION, ET PROCÉDÉ DE MISE EN OEUVRE**
SCHNELLE FLOTATIONSVORRICHTUNG FÜR MIT SCHWEBSTOFFEN BELADENES WASSER UND VERFAHREN ZU IHRER IMPLEMENTIERUNG
RAPID FLOTATION DEVICE FOR WATER LADEN WITH SUSPENDED MATTER, AND METHOD FOR IMPLEMENTING SAME

(30) Priorité: 12.05.2011 FR 1154109
(43) Date de publication de la demande: 19.03.2014
(73) Titulaire: Degrémont, 92040 Paris La Défense (FR)
(72) Inventeur: LE QUESNE, François, 92130 Issy les Moulineaux (FR); VION, Patrick, 78800 Houilles (FR)
(74) Mandataire: Cabinet Armengaud Aîné
(86) Numéro de dépôt international: PCT/IB2012/052225
(87) Numéro de publication internationale: WO 2012/153245

(56) Documents cités:
- EP-B1- 0 631 800
- WO-A1-00/43320
- WO-A1-03/064326
- WO-A1-2007/028894

## Description

L'invention est relative à un dispositif de flottation rapide, notamment à air dissous, pour traitement d'une eau chargée en matières en suspension (MES), dispositif du genre de ceux qui comportent une zone de mélange, notamment avec moyens d'injection d'un liquide pressurisé contenant de l'air dissous, séparée d'une zone de flottation par une paroi au-dessus de laquelle passe le liquide à traiter provenant de la zone de mélange, la zone de flottation comportant en partie basse un plancher perforé, situé au-dessus d'un radier, une évacuation d'eau flottée étant prévue sous le plancher jusqu'à un système de sortie.

Des dispositifs de flottation de ce genre sont connus, notamment d'après le Mémento technique de l'eau, dixième édition, Degrémont, Tome 2, pages 875-879 relatives à des flottateurs à lit de bulles dans lesquels l'accrochage entre les bulles d'air et un floc est amélioré et permet des fortes vitesses ascensionnelles des agrégats bulles-flocs jusqu'à des valeurs de 30-40 m/h.

EP 1 937 600 et WO2007/028894 concernent également des dispositifs de flottation de ce genre, intégrés dans un dispositif de clarification comportant une zone de filtration membranaire en aval de la zone de flottation.

Grâce à l'apparition de ces flottateurs rapides à air dissous, ces dernières années, leur domaine d'application s'est largement étendu, et ils sont utilisés dans de nombreuses applications telles que, entre autres, les eaux potables, les eaux de mer, les eaux résiduaires, les eaux industrielles et les eaux sales de lavage de filtres.

Certaines de ces eaux sont plus ou moins chargées en matières en suspension, de sorte que les risques de dépôt sur les radiers des dispositifs de flottation augmentent. L'inconvénient principal de tels dépôts est de nuire à la répartition hydraulique des appareils, en particulier pour l'écoulement de l'eau au-dessus du plancher et son caractère uniforme. La répartition hydraulique est d'autant plus critique que les appareils sont à grande vitesse de flottation, notamment de 20 à 40 m/h sur la surface de flottation.

La maîtrise de ces dépôts sur le radier est un point important pour garantir la répartition du débit sur la largeur du flottateur et en pérenniser le bon fonctionnement.

L'évacuation des boues de fond peut se faire, comme pour les boues flottées, par l'utilisation d'un racleur mécanique, ou d'un aspirateur mobile de fond, qu'il convient d'introduire dans l'espace réduit existant entre le plancher perforé et le radier. Une telle opération est relativement compliquée.

Pour garder un caractère simple, économique et écologique à l'exploitation de la flottation, on souhaite minimiser tous les équipements mécaniques de sorte qu'une telle évacuation par racleur n'est pas satisfaisante.

Pour maîtriser les dépôts de fond, avec évacuation sans faire intervenir de moyen mécanique et sans raclage, il a été proposé de recourir à des trémies multiples sous toute la surface de flottation, ou à des réseaux de fond, qui peuvent être constitués de tubes perforés.

Cette solution n'est pas entièrement satisfaisante car les trémies induisent des coûts de génie civil et/ou d'équipements importants, tandis que les réseaux sont sujets au colmatage.

L'invention a pour but, surtout de fournir un dispositif de flottation rapide, du genre défini précédemment, qui ne présente plus ou à un degré moindre les inconvénients évoqués ci-dessus, et qui permet, en particulier, de maîtriser les dépôts de boues dans l'espace situé sous le plancher en limitant leur formation et en permettant un nettoyage aisé si besoin est. En particulier, les eaux que l'invention vise à traiter peuvent présenter une concentration en matières en suspension (MES) comprise entre 20 et 1000 mg/L.

Selon l'invention, le dispositif de flottation rapide du genre en question est caractérisé en ce que :
au moins deux canaux séparés, orientés selon le sens d'écoulement de l'eau, sont prévus sous le plancher, et sous d'éventuels ouvrages prolongeant le plancher, jusqu'en amont du système de sortie,
l'extrémité aval des canaux est ouverte et située au-dessus du niveau du plancher,
et un moyen d'évacuation est prévu, pour chaque canal, en bout de la partie basse aval de ce canal.

De préférence, l'extrémité aval ouverte des canaux est située à au moins 1 m (1 mètre) au-dessus du niveau du plancher. Avantageusement, cette extrémité aval ouverte des canaux est située au niveau de la sur-verse de l'eau flottée, ou préférablement au-dessous, à environ 40 cm au-dessous du bord supérieur du déversoir de l'eau flottée.

Les canaux situés sous le plancher peuvent être séparés par des murets supportant le plancher. Avantageusement, les canaux présentent une partie ascendante juste en amont du système de sortie, lesdites parties ascendantes étant séparées par les murets qui remontent au-delà du plancher.

Les canaux peuvent comporter, au pied de leur partie ascendante, un point de reprise des boues et une tuyauterie d'extraction. Ce point de reprise peut être constitué par une cavité dans laquelle plonge l'extrémité de la tuyauterie d'extraction.

Les canaux sont avantageusement profilés pour assurer une vitesse suffisante, sensiblement constante, de l'écoulement de liquide, supérieure à la vitesse d'arrachement des boues. La vitesse d'arrachement des boues est la vitesse horizontale nécessaire au-dessus d'un lit de boues qui permet la mise en suspension des boues de la surface de ce lit. Le profil des canaux est avantageusement assuré par un fond incliné d'amont en aval entraînant une augmentation de la profondeur et de la section d'amont en aval.

La section de la partie ascendante des canaux peut être déterminée pour que la vitesse ascensionnelle du liquide soit supérieure à la vitesse de décantation des particules les plus grosses pouvant échapper à la flottation.

Un moyen de prélèvement d'eau flottée peut être prévu dans une des parties ascendantes des canaux, notamment lorsqu'une partie banalisée est située au-dessus des extrémités hautes des canaux et communique avec tous les canaux, pour une pressurisation et injection d'eau dans la zone de mélange.

L'invention est également relative à un procédé de mise en oeuvre d'un dispositif de flottation rapide tel que défini précédemment, caractérisé en ce que, lors du fonctionnement en production, sans arrêter l'arrivée d'effluents à traiter, on effectue, pendant un temps réduit généralement inférieur à 2 min , une extraction à fort débit instantané sur chaque canal par ouverture du moyen d'évacuation pour purger les boues déposées en pied de la partie ascendante du canal.

Pour assurer un nettoyage de la partie d'un canal située sous le plancher, on arrête la production et l'arrivée d'effluent à traiter, et on effectue sur le canal concerné un balayage par ouverture prolongée, supérieure à 1 min, du moyen d'évacuation du canal pour abaisser le niveau de liquide au-dessous du bord supérieur de la partie ascendante du canal et pour balayer le canal essentiellement par de l'eau qui traverse le plancher, et pour arracher et évacuer les boues déposées dans le canal.

Avantageusement, la vitesse d'écoulement dans les canaux, lors d'un nettoyage est comprise entre 200 et 1000 m/h, selon la nature des boues.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une coupe schématique verticale d'un dispositif de flottation rapide selon l'invention.
Fig. 2 est une vue de dessus du dispositif de Fig. 1.
Fig. 3 est une coupe verticale simplifiée semblable à Fig. 1 illustrant une extraction de boues en pied de partie ascendante d'un canal lors de la production.
Fig. 4 est une coupe schématique suivant la ligne IV-IV de Fig. 3.
Fig. 5 est une coupe verticale simplifiée, semblable à Fig. 1, illustrant un nettoyage hydraulique périodique, avec arrêt de production et
Fig. 6 est une coupe schématique suivant la ligne VI-VI de Fig. 5.

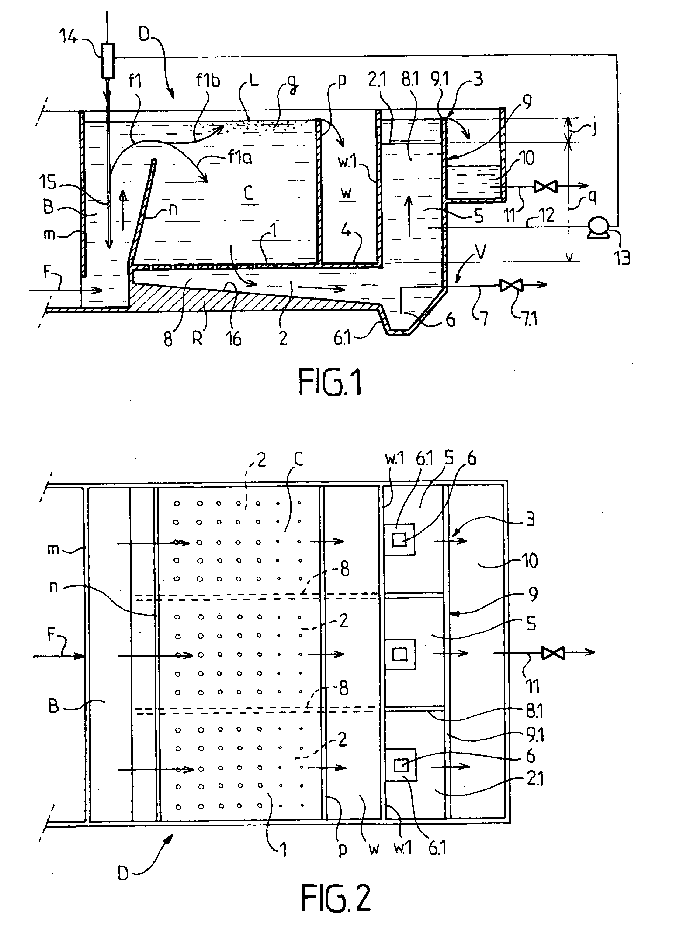

En se reportant aux dessins, notamment aux Fig.1 et 2, on peut voir que le dispositif de flottation D selon l'invention comporte dans un bassin, une zone de mélange et de détente B dans laquelle l'eau qui doit subir la flottation arrive selon la flèche F en partie basse, au-dessous d'une paroi m, en provenance d'une zone de floculation, non représentée, située sur la gauche de la paroi m selon Fig. 1.

La zone de mélange B est séparée d'une zone de flottation C par une paroi n qui, de préférence, s'écarte de bas en haut de la paroi m. Le bord supérieur de la paroi n est situé à distance, notamment de quelques dizaines de centimètres, du niveau supérieur L du liquide dans la zone de flottation C. La paroi n s'étend jusqu'au radier R constituant le fond du bassin.

L'eau passe par-dessus le bord supérieur de la paroi n pour arriver dans la zone de flottation comme illustré par une flèche f1 qui se divise en deux branches dont l'une f1a, dirigée vers le bas, représente le trajet de l'eau débarrassée des matières en suspension, tandis que la flèche f1 b, dirigée vers le haut, illustre le trajet des microbulles chargées de flocs qui se dirigent vers un lit de bulles en surface de la zone de flottation C. Les boues flottées g récupérées en surface de la zone C sont évacuées dans une fosse w de stockage/dégazage/reprise des boues, en passant par-dessus une paroi p dont le bord supérieur forme déversoir. La hauteur de la paroi p est généralement comprise entre 2m et 5 m.

La zone de flottation C comporte en partie basse un plancher perforé 1 situé au-dessus du radier R à une distance relativement réduite, de l'ordre de quelques dizaines de centimètres. Les perforations du plancher 1 sont prévues pour assurer un écoulement uniforme dans la zone de flottation ; en particulier, le diamètre des perforations est plus important en amont, au voisinage de la paroi n, et diminue progressivement vers l'aval en direction de la paroi p. En variante, les perforations peuvent avoir le même diamètre mais leur nombre par unité de surface est plus élevé au voisinage de la paroi n et diminue vers l'aval.

Selon l'invention, au moins deux canaux séparés 2, indépendants, orientés selon le sens d'écoulement de l'eau, sont prévus sous le plancher horizontal 1 et s'étendent jusqu'en amont d'un système de sortie 3 de l'eau flottée. Les canaux 2 continuent, au-delà du plancher 1, et passent sous le fond 4 de la fosse w constituant un ouvrage qui prolonge le plancher.

L'extrémité aval ouverte 2.1 des canaux est située à une distance q (Fig.1) au-dessus du niveau du plancher 1, de sorte que chacun des canaux 2 comporte une partie ascendante 5, au-delà de la fosse w. La distance q est de préférence d'au moins 1 mètre

Au pied de la partie ascendante, chaque canal comporte un point 6 de reprise des boues, en fond d'une cavité en tronc de pyramide inversé 6.1, avec une tuyauterie d'extraction 7, munie d'une vanne 7.1, constituant un moyen d'évacuation V en bout de chaque partie basse aval de canal.

Les canaux 2 sont séparés par des murets verticaux 8 parallèles, constituant les parois latérales de ces canaux. Les murets 8, dans leur portion située sous le plancher 1, servent de supports à ce plancher et aux ouvrages prolongeant ce plancher, notamment pour le fond 4 de la fosse w. L'utilisation de ces murets comme supports du plancher élimine la nécessité d'autres types de supports, tels que des potelets qui créent des zones de dépôt de boues.

La fosse w est délimitée par une paroi aval w.1 verticale. La partie ascendante 5 des canaux est comprise entre cette paroi w.1 et une paroi verticale aval 9 de l'installation, dont le bord supérieur 9.1 est légèrement inférieur au niveau de la paroi p.

Les murets 8 s'étendent sous le fond 4 jusqu'à la paroi 9 et comportent une partie verticale 8.1, orthogonale à la paroi 9, délimitant la partie ascendante 5 des canaux 2. L'extrémité ouverte supérieure 2.1 des canaux correspond au bord supérieur de la partie verticale 8.1 des murets.

L'extrémité aval ouverte 2.1 des canaux est située à une distance q au-dessus du niveau du plancher 1, cette distance q étant avantageusement égale à au moins 1 m. L'extrémité ouverte 2.1 est située au niveau 9.1 de la sur-verse de l'eau flottée, ou de préférence à une distance j (Fig. 1) d'environ 40 cm, au-dessous.

Le moyen d'évacuation V ou système d'extraction, de chaque canal, est prévu pour permettre de soutirer, aussi bien en production avec arrivée continue d'effluents à traiter, ou à l'arrêt lorsque l'arrivée d'effluents à traiter est stoppée, un débit Qs, sortant par la conduite 7, supérieur au débit nominal d'alimentation Qa de chaque canal. Ce débit Qa correspond au débit d'eau flottée qui traverse le plancher 1 et arrive dans chaque canal.

L'installation selon l'invention est conçue de telle sorte que la vitesse d'écoulement Ua de l'eau dans chaque canal 2 sous le plancher 1, correspondant au débit Qa d'alimentation dans la partie horizontale des canaux est supérieure à la vitesse d'arrachement des boues pour limiter les dépôts lors du fonctionnement au débit nominal de l'installation.

La vitesse d'arrachement des boues est la vitesse horizontale au-dessus d'un lit de boues qui permet la mise en suspension des boues de la surface de ce lit.

La vitesse ascensionnelle de l'eau, dans la partie ascendante 5, est désignée par Ud et correspond au débit Qa. Les sections de passage sont déterminées pour que cette vitesse Ud soit supérieure à la vitesse de décantation des particules les plus grosses pouvant échapper à la flottation.

Le bord supérieur 9.1 de la paroi d'extrémité aval 9 constitue le déversoir du système de sortie 3 par-dessus lequel passe l'eau flottée pour tomber dans une goulotte 10 d'où elle est évacuée, en partie basse, par une conduite 11. La goulotte 10 recueille l'eau flottée provenant des différents canaux 2 et la conduite 11 recueille l'ensemble des flux déversés par chaque canal.

La partie ascendante 5 de chaque canal peut être remontée jusqu'au niveau d'eau sur le déversoir de sortie, c'est-à-dire jusqu'au niveau du bord 9.1. Avantageusement, la hauteur du déversoir propre à chaque partie ascendante 5 peut être réglable.

Dans le cas où la partie ascendante 5 est remontée jusqu'au niveau d'eau de sur-verse 9.1, le bord supérieur 2.1 se trouve au niveau du déversoir 9.1. La répartition du débit d'eau flottée sur toute la largeur de l'ouvrage est assurée par un niveau identique des déversoirs 9.1 associés à chaque partie ascendante 5, en particulier si la répartition latérale de l'écoulement d'eau flottée n'est pas assurée efficacement en amont par le plancher 1.

Dans le cas où le plancher 1 assure une bonne répartition latérale du flux d'eau flottée, la partie ascendante 5 des canaux 2 peut s'arrêter à un niveau 2.1 situé au-dessous du plan d'eau correspondant au niveau 9.1 du déversoir, ce qui permet de conserver un seul déversoir, fixe ou mobile, pour l'ensemble des sorties des canaux 2. De préférence, le bord supérieur de la partie verticale 8.1 du muret, correspondant au niveau 2.1, s'arrête à une distance j d'environ 40 cm sous le plan d'eau défini par le déversoir 9.1. Il y a alors banalisation des sorties des canaux qui sont en communication par la zone située au-dessus des bords supérieurs des parties ascendantes 8.1 des murets. Ceci permet un soutirage du débit d'eau (pour la pressurisation et son injection dans la zone de mélange B) dans la partie ascendante de n'importe quel canal 2, à un niveau relativement bas pour éviter la création de vortex. L'eau prélevée dans un canal provient du flux général grâce à la communication qui existe entre les divers canaux dans la zone banalisée située au-dessus des bords supérieurs 2.1.

L'eau prélevée par une conduite 12 pour la pressurisation par une pompe 13 est envoyée dans un dispositif 14 pour injection et dissolution d'air dans l'eau sous pression. L'eau pressurisée contenant de l'air dissous est injectée par un tube 15 en partie basse de la zone de mélange B.

La section de passage des canaux profilés 2 augmente de l'amont vers l'aval. Cette augmentation est avantageusement obtenue par une paroi de fond 16 inclinée comme illustré sur Fig. 1 de l'amont vers l'aval.

Dans l'exemple représenté sur Fig. 2, trois canaux 2 parallèles sont prévus en partie basse de l'installation. Le nombre de canaux peut être supérieur et est déterminé en fonction des conditions d'exploitation.

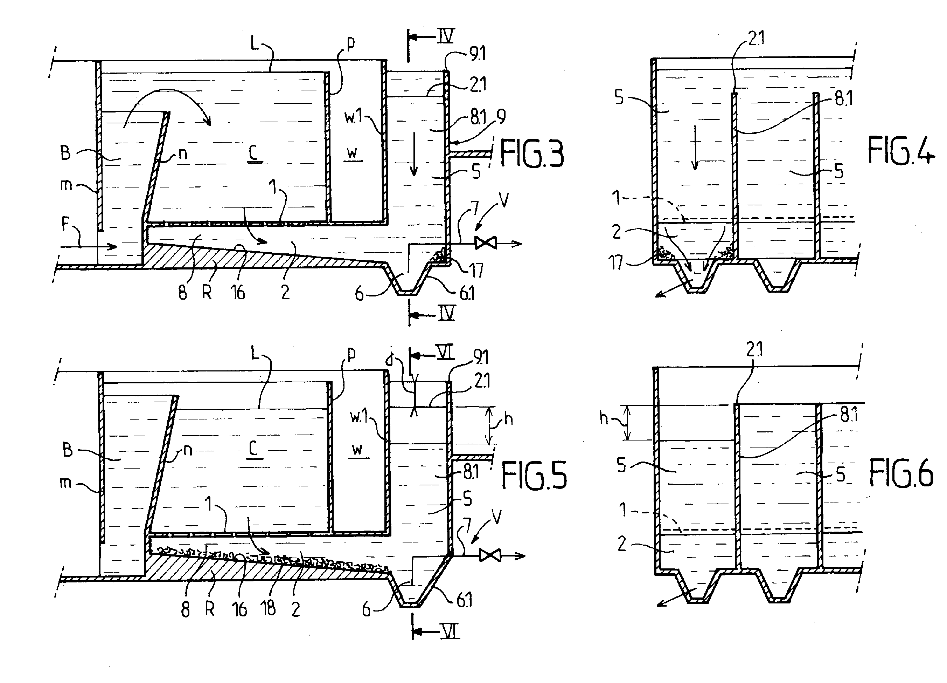

Le procédé de mise en oeuvre du dispositif selon l'invention est le suivant, notamment avec référence aux Fig.3 à 6. Sur les Fig.4 et 6 seules deux parties ascendantes 5 de canaux adjacents ont été représentées pour simplifier, mais plus de deux canaux sont généralement prévus.

### Production

En production, c'est-à-dire lorsque l'arrivée d'eau à traiter est assurée en amont, de l'eau floculée arrive en partie basse de la chambre de mélange B et se mélange avec l'eau pressurisée injectée par le tube 15. Les microbulles formées, auxquelles s'attachent des flocs, montent avec l'écoulement d'eau pour former un lit de bulles en partie supérieure de la zone de flottation C. Les boues flottées sont récupérées en surface puis évacuées dans la fosse w de stockage/dégazage/reprise des boues.

L'eau flottée s'écoule de haut en bas dans la zone de flottation C et traverse le plancher 1 pour s'écouler dans les canaux 2, remonter dans la partie ascendante 5 et se déverser, par-dessus le bord supérieur 9.1 dans la goulotte 10 de récupération d'eau flottée.

Le système d'extraction formé par le moyen d'évacuation V prévu au pied de la partie ascendante de chaque canal permet d'effectuer une extraction des dépôts 17 de boues (Figs. 3 et 4) qui se sont produits autour du point de reprise 6 des boues au pied de la partie ascendante 5 d'un canal. Pour cela, on active l'ouverture du moyen d'évacuation V d'un canal, ce qui crée un fort débit Qs d'écoulement, principalement de haut en bas dans la partie ascendante 5, créant une forte vitesse d'entraînement, notamment double de celle du débit nominal du canal si Qs = 2 Qa. On rappelle que Qa correspond au débit nominal du canal.

Cette forte vitesse d'entraînement remet en suspension les dépôts 17 autour du point de reprise des boues et permet de les évacuer. La suppression des dépôts au pied de la partie ascendante 5 du canal élimine aussi les amorces de dépôts dans la partie horizontale du canal 2, et en particulier sous le plancher 1. Cette extraction d'une durée limitée de quelques minutes, voire inférieure à 1 minute, correspond à une action préventive qui peut être effectuée périodiquement sur chaque canal séparément sans interrompre la production.

### Nettoyage hydraulique

Il est en outre possible d'effectuer un nettoyage hydraulique périodique (Fig.5 et 6) des canaux 2 dans leurs parties situées sous le plancher 1. Pour cela, le dispositif de flottation est mis à l'arrêt, l'arrivée d'eau à traiter étant stoppée. Les extractions sont effectuées canal par canal.

Lorsque cette opération est effectuée sur un canal 2, par ouverture du moyen de vidange V, dès que le niveau d'eau dans la partie ascendante 5 du canal devient inférieur à l'arase supérieure du muret 8.1, c'est-à-dire devient inférieur au bord 2.1 (voir Fig. 5 et 6), le débit d'eau d'extraction provient de l'eau qui a traversé le plancher 1 et s'écoule horizontalement dans le canal 2. Ce débit parcourt alors la partie horizontale du canal avec des vitesses quasiment doubles des vitesses d'arrachement des boues, toujours dans le cas où Qs = 2 Qa, dans l'hypothèse d'un canal 2 relativement propre dont la section n'est pas diminuée par la présence de boues. La vitesse d'écoulement est supérieure à cette valeur lorsqu'il y a des dépôts substantiels 18 de boues dans le canal qui réduisent la section de passage. Ces survitesses permettent l'entraînement des boues déposées 18 comme illustré sur Figs. 5 et 6.

### Exemple

La mise en oeuvre du procédé est détaillée à propos d'un exemple qui concerne le cas d'eaux de lavage de filtres biologiques contenant des matières en suspension selon une concentration comprise entre 200 et 1000 mg/L.

Le dispositif de flottation permet de traiter un débit de 360 m³/h.

La surface du plancher perforé 1 assurant l'équi-répartition de l'écoulement est de 18 m². Ce plancher débouche sur quatre canaux 2 d'environ 1 m de large chacun. La hauteur et le profil de chaque canal sont calculés de façon qu'en tout point du canal, au débit nominal, les vitesses d'écoulement soient supérieures à celles d'arrachement des boues. Les vitesses d'écoulement sont situées entre 200 et 1000 m/h selon la nature des boues.

L'appareil est équipé d'un déversoir 9.1 mobile et l'option a été prise de positionner le bord supérieur 2.1 de la partie ascendante 8.1 du muret du canal à 250 mm au-dessous du déversoir 9.1 (j = 250 mm).

La sortie de l'eau flottée, qui passe sur le déversoir 9.1, est de ce fait banalisée, puisque répartie sur tous les canaux, et il est possible de soutirer l'eau de pressurisation de l'une quelconque des cellules formées par les parties ascendantes des canaux. Le débit de sortie Qs peut être égal à 180 m³/h alors que le débit nominal d'un canal et d'une cellule est de 90 m³/h.

Le système d'extraction, par gravité ou par pompage, est prévu pour assurer un débit de 180 m³/h.

Les extractions sont effectuées cycliquement, par l'utilisation de vannes automatiques prévues dans les moyens d'évacuation V.

En production, pour éviter toute amorce de dépôt en sortie de la partie horizontale du canal, en pied de la partie ascendante, des extractions périodiques sont réalisées au minimum une fois par jour. Le sur-débit instantané permet la remise en suspension, puis l'entraînement de toutes les boues dans et autour de la zone d'extraction 6, comme exposé précédemment.

Toutefois, suite à de nombreux arrêts/démarrages et à des fonctionnements à des débits inférieurs au débit nominal, des boues peuvent s'accumuler sous le plancher 1, comme représenté en 18 sur Figs. 5 et 6. Des nettoyages hydrauliques préventifs sont réalisés périodiquement, en particulier entre une fois par semaine à une fois tous les trois mois suivant le type de boues à traiter. Comme exposé précédemment, cette opération consiste à arrêter l'arrivée d'eaux à traiter dans le dispositif de flottation, et à lancer des extractions cycliques pour chaque canal. Le niveau d'eau dans l'ouvrage baisse.

Quand ce niveau passe en dessous du bord supérieur 2.1 de la partie verticale 8.1 du muret terminant chaque canal 2, les canaux se comportent en zones isolées ne communiquant que par l'amont du plancher 1. Le débit d'extraction Qs, de 180 m³/h dans l'exemple considéré, va provenir principalement de l'eau traversant le plancher 1. Ce débit d'extraction est alors le double du débit nominal et crée sous le plancher de fortes vitesses d'arrachement.

Si le canal 2 considéré comporte peu de dépôts, la vitesse d'extraction est égale à deux fois la vitesse d'arrachement. Mais, si du fait d'une maintenance plus espacée, ou d'un dysfonctionnement, les dépôts 18 sont importants, alors la vitesse d'extraction peut atteindre dix fois la vitesse d'arrachement, garantissant ainsi une remise en suspension de toute la boue.

Le soutirage dans une seule cellule formée par la partie ascendante 5 d'un canal se traduit par un abaissement de niveau h (Fig. 6) dans cette partie ascendante 5 du canal 2 considéré. Cet abaissement h de niveau est de l'ordre de quatre fois la perte de charge créée par le plancher 1 et la partie amont du canal 2 au débit nominal, puisque la vitesse d'écoulement est égale à deux fois la vitesse nominale (la perte de charge est proportionnelle au carré de la vitesse). Ensuite, tous les niveaux dans les parties ascendantes des canaux s'abaisseront en parallèle, la différence entre l'aval du canal en soutirage et l'aval des autres canaux restant alors constante et toujours de l'ordre de quatre fois la perte de charge initiale du plancher 1 et de la partie amont du canal. Cette différence de niveau h reste de préférence inférieure à 1 m (un mètre).

Un dispositif de flottation selon l'invention peut être utilisé pour le traitement d'eaux chargées en matières en suspension conduisant à une mousse de boues en surface de la zone de flottation plus dense, et à une accumulation d'éléments denses sous le plancher 1.

## Revendications

1. Dispositif de flottation rapide, notamment à air dissous, pour traitement d'une eau chargée en matières en suspension (MES), comportant une zone de mélange (B) séparée d'une zone de flottation (C) par une paroi (n) au-dessus de laquelle passe le liquide à traiter provenant de la zone de mélange, la zone de flottation comportant en partie basse un plancher perforé (1), situé au-dessus d'un radier (R), une évacuation d'eau flottée étant prévue sous le plancher jusqu'à un système de sortie (3), **caractérisé en ce que** :
- au moins deux canaux (2) séparés, orientés selon le sens d'écoulement de l'eau, sont prévus sous le plancher (1), et sous d'éventuels ouvrages (w) prolongeant le plancher, jusqu'en amont du système de sortie (3),
- l'extrémité aval (2.1) des canaux est ouverte et située au-dessus du niveau du plancher,
- et un moyen d'évacuation (V) est prévu, pour chaque canal, en bout de la partie basse aval de ce canal.

2. Dispositif selon la revendication 1, **caractérisé en ce que** l'extrémité aval ouverte (2.1) des canaux est située à au moins 1 m (1 mètre) au-dessus du niveau du plancher (1).

3. Dispositif selon la revendication 1 ou 2, **caractérisé en ce que** l'extrémité aval ouverte (2.1) des canaux est située à proximité au-dessous du niveau (9.1) de la sur-verse de l'eau flottée.

4. Dispositif selon l'une quelconque des revendications précédentes, **caractérisé en ce que** les canaux (2) situés sous le plancher sont séparés par des murets (8) supportant le plancher.

5. Dispositif selon la revendication 4, **caractérisé en ce que** les canaux (2) présentent une partie ascendante (5) juste en amont du système de sortie (3), lesdites parties ascendantes étant séparées par les murets (8.1) qui remontent au-delà du plancher.

6. Dispositif selon la revendication 5, **caractérisé en ce que** les canaux (2) comportent, au pied de leur partie ascendante (5), un point de reprise (6) des boues et une tuyauterie d'extraction (7).

7. Dispositif selon la revendication 6, **caractérisé en ce que** le point de reprise (6) est constitué par une cavité (6.1) dans laquelle plonge l'extrémité de la tuyauterie d'extraction (7).

8. Dispositif selon l'une quelconque des revendications précédentes, **caractérisé en ce que** les canaux (2) sont profilés pour assurer une vitesse suffisante, sensiblement constante, de l'écoulement de liquide, supérieure à la vitesse d'arrachement des boues.

9. Dispositif selon la revendication 8, **caractérisé en ce que** le profil des canaux est assuré par un fond incliné (16) d'amont en aval entraînant une augmentation de la profondeur et de la section d'amont en aval.

10. Dispositif selon la revendication 5, **caractérisé en ce que** la section de la partie ascendante (5) des canaux est déterminée pour que la vitesse ascensionnelle du liquide soit supérieure à la vitesse de décantation des particules les plus grosses pouvant échapper à la flottation.

11. Dispositif selon l'une quelconque des revendications précédentes, **caractérisé en ce qu'**un moyen de prélèvement d'eau flottée (12,13) est prévu dans une des parties ascendantes des canaux, notamment lorsqu'une partie banalisée est située au-dessus des extrémités hautes (2.1) des canaux et communique avec tous les canaux, pour une pressurisation et injection d'eau dans la zone de mélange (B).

12. Procédé de mise en oeuvre d'un dispositif de flottation rapide selon l'une quelconque des revendications précédentes, **caractérisé en ce que**, lors du fonctionnement en production, sans arrêter l'arrivée d'effluents à traiter, on effectue une extraction à fort débit instantané sur chaque canal par ouverture du moyen d'évacuation (V) pour purger les boues (17) déposées en pied (6) de la partie ascendante (5) du canal.

13. Procédé selon la revendication 11, **caractérisé en ce que** pour assurer un nettoyage de la partie d'un canal (2) située sous le plancher (1), on arrête la production et l'arrivée d'effluent à traiter, et on effectue sur le canal concerné un balayage par ouverture prolongée du moyen d'évacuation (V) du canal pour abaisser le niveau de liquide au-dessous du bord supérieur de la partie ascendante du canal et pour balayer le canal essentiellement par de l'eau qui traverse le plancher (1), et évacuer les boues éventuellement déposées dans le canal.

14. Procédé selon la revendication 13, **caractérisé en ce que** la vitesse d'écoulement dans les canaux (2), lors d'un nettoyage, est comprise entre 200 et 1000 m/h, selon la nature des boues.

## Patentansprüche

1. Schnelle Flotationsvorrichtung, insbesondere mit gelöster Luft, zur Behandlung von mit Schwebstoffen (MES) beladenem Wasser, mit einer Mischzone (B), die von einer Flotationszone (C) durch eine Wand (n) getrennt ist, über welche die aus der Mischzone kommende, zu behandelnde Flüssigkeit strömt, wobei die Flotationszone im unteren Teil einen perforierten Boden (1) aufweist, welcher sich über einer Sohle (R) befindet, wobei die Ableitung des flotierten Wassers unter dem Boden bis zu einem Auslasssystem (3) vorgesehen ist, **dadurch gekennzeichnet, dass**:
- mindestens zwei getrennte, in Fließrichtung des Wassers gerichtete Kanäle (2) unter dem Boden (1) und unter möglichen Bauten (w), welche den Boden verlängern, bis vor das Auslasssystem (3) vorgesehen sind,
- das stromabwärtige Ende (2.1) der Kanäle offen ist und sich über dem Niveau des Bodens befindet,
- und für jeden Kanal eine Ableiteinrichtung (V) am Ende des unteren stromabwärtigen Teils des jeweiligen Kanals vorgesehen ist.

2. Vorrichtung nach Anspruch 1, **dadurch gekennzeichnet, dass** sich das stromabwärtige offene Ende (2.1) der Kanäle mindestens 1 m (1 Meter) über dem Niveau des Bodens (1) befindet.

3. Vorrichtung nach Anspruch 1 oder 2, **dadurch gekennzeichnet, dass** das stromabwärtige offene Ende (2.1) der Kanäle nahe unterhalb des Niveaus (9.1) des Überlaufs des flotierten Wassers befindet.

4. Vorrichtung nach einem der vorhergehenden Ansprüche, **dadurch gekennzeichnet, dass** die unter dem Boden befindlichen Kanäle (2) durch den Boden stützende Trennmauern (8) voneinander getrennt sind.

5. Vorrichtung nach Anspruch 4, **dadurch gekennzeichnet, dass** die Kanäle (2) einen ansteigenden Bereich (5) unmittelbar vor dem Auslasssystem (3) aufweisen, wobei die ansteigenden Bereiche durch die Trennmauern (8.1) voneinander getrennt sind, die über den Boden hinaus aufragen.

6. Vorrichtung nach Anspruch 5, **dadurch gekennzeichnet, dass** die Kanäle (2) am Fuß ihres ansteigenden Bereichs (5) eine Entnahmestelle (6) für Schlämme und eine Abführrohrleitung (7) aufweisen.

7. Vorrichtung nach Anspruch 6, **dadurch gekennzeichnet, dass** die Entnahmestelle (6) durch einen Hohlraum (6.1) gebildet ist, in welchem das Ende der Abführrohrleitung (7) eingetaucht ist.

8. Vorrichtung nach einem der vorhergehenden Ansprüche, **dadurch gekennzeichnet, dass** die Kanäle (2) mit Profilen versehen sind, um eine ausreichende, im Wesentlichen konstante Fließgeschwindigkeit der Flüssigkeit zu gewährleisten, die höher als die Trenngeschwindigkeit der Schlämme ist.

9. Vorrichtung nach Anspruch 8, **dadurch gekennzeichnet, dass** das Profil der Kanäle durch einen von stromaufwärts nach stromabwärts geneigten Boden (16) gewährleistet ist, was zu einer Vergrößerung der Tiefe und des Querschnitts von stromaufwärts nach stromabwärts führt.

10. Vorrichtung nach Anspruch 5, **dadurch gekennzeichnet, dass** der Querschnitt des ansteigenden Bereichs (5) der Kanäle so gewählt ist, dass die Steiggeschwindigkeit der Flüssigkeit höher als die Absetzgeschwindigkeit der größten Partikel sind, welche der Flotation entgehen können.

11. Vorrichtung nach einem der vorhergehenden Ansprüche, **dadurch gekennzeichnet, dass** zur Druckbeaufschlagung und zum Einspritzen von Wasser in die Mischzone (B) eine Einrichtung (12, 13) zur Entnahme von flotiertem Wasser in einem der ansteigenden Bereiche der Kanäle vorgesehen ist, insbesondere wenn sich ein banalisierter Bereich oberhalb der oberen Enden (2.1) der Kanäle befindet und mit sämtlichen Kanälen in Verbindung steht.

12. Verfahren zur Verwendung einer schnellen Flotationsvorrichtung nach einem der vorhergehenden Ansprüche, **dadurch gekennzeichnet, dass** während des Produktionsbetriebs, ohne Unterbrechung des Zulaufs von zu behandelndem Abwasser, eine Ableitung mit momentan hohem Durchsatz an jedem Kanal durchgeführt wird, indem die Entsorgungseinrichtung (V) zum Abführen der am Fuß (6) des ansteigenden Bereichs (5) des Kanals gesammelten Schlämme (17) geöffnet wird.

13. Verfahren nach Anspruch 11, **dadurch gekennzeichnet, dass** zur Gewährleistung der Säuberung des unter dem Boden (1) befindlichen Bereichs eines Kanals (2) die Produktion und der Zulauf von zu behandelndem Abwasser angehalten werden, und dass in dem betreffenden Kanal eine Spülung vorgenommen wird, indem die Entsorgungseinrichtung (V) des Kanals für einen längeren Zeitraum geöffnet wird, um den Flüssigkeitspegel unter den oberen Rand des ansteigenden Bereichs des Kanals zu senken und um den Kanal im Wesentlichen mit Wasser zu spülen, das den Boden (1) durchquert, und die möglicherweise in dem Kanal abgesetzten Schlämme abzuleiten.

14. Verfahren nach Anspruch 13, **dadurch gekennzeichnet, dass** die Fließgeschwindigkeit in den Kanälen (2) bei einer Reinigung je nach der Art des Schlamms zwischen 200 und 1000 m/h liegt.

## Claims

1. A rapid flotation device, notably a dissolved air flotation device, for treating water laden with suspended matter (MES), comprising a mixing zone (B) separated from a flotation zone (C) by a wall (n) above which the liquid for treatment, coming from the mixing zone, passes, the flotation zone comprising toward the bottom a perforated floor (1) situated above a sole (R), a float water discharge being provided under the floor leading to an outlet system (3), **characterized in that**:
- at least two separate canals (2), oriented in the direction in which the water flows, are provided under the floor (1) and under any works (w) that may extend the floor, leading to upstream of the outlet system (3),
- the downstream end (2.1) of the canals is open and situated above floor level,
- and a discharge means (V) is provided, for each canal, at the end of the downstream bottom part of this canal.

2. The device as claimed in claim 1, **characterized in that** the open downstream end (2.1) of the canals is situated at least 1 m (1 meter) above the level of the floor (1).

3. The device as claimed in claim 1 or 2, **characterized in that** the open downstream end (2.1) of the canals is situated close below the level (9.1) of the float water overflow.

4. The device as claimed in any one of the preceding claims, **characterized in that** the canals (2) situated under the floor are separated by low walls (8) that support the floor.

5. The device as claimed in claim 4, **characterized in that** the canals (2) have a rising part (5) just upstream of the outlet system (3), said rising parts being separated by the low walls (8.1) which rise up beyond the floor.

6. The device as claimed in claim 5, **characterized in that** the canals (2) comprise, at the foot of their rising part (5), a sludge takeoff (6) and extraction piping (7).

7. The device as claimed in claim 6, **characterized in that** the takeoff (6) consists of a cavity (6.1) into which the end of the extraction piping (7) is dipped.

8. The device as claimed in any one of the preceding claims, **characterized in that** the canals (2) are profiled to ensure that the flow of liquid flows at a high enough, substantially constant speed that is higher than the sludge surface-wash speed.

9. The device as claimed in claim 8, **characterized in that** the profile of the canals is provided by a bottom (16) that is inclined from upstream to downstream causing an increase in the depth and cross section from upstream to downstream.

10. The device as claimed in claim 5, **characterized in that** the cross section of the rising part (5) of the canals is determined so that the upward speed of the liquid is higher than the speed at which the largest particles that may have escaped flotation sediment.

11. The device as claimed in any one of the preceding claims, **characterized in that** a float water withdrawal means (12, 13) is provided in one of the rising parts of the canals, notably when a commonized part is situated above the top ends (2.1) of the canals and communicates with all the canals, for pressurizing and injecting water into the mixing zone (B).

12. A method for implementing a rapid flotation device according to any one of the preceding claims, **characterized in that**, when operating in production, without shutting down the inlet of effluent that is to be treated, extraction with a high momentary flow rate is performed on each canal by opening the discharge means (V) in order to clear out the sludge (17) deposited at the foot (6) of the rising part (5) of the canal.

13. The method as claimed in claim 11, **characterized in that** in order to clean that part of a canal (2) that is situated under the floor (1), production and the inlet of effluent that is to be treated are shut down, and the affected canal is swept by prolonged opening of the discharge means (V) of that canal in order to cause the liquid level to drop below the upper edge of the rising part of the canal and sweep the canal essentially using water which passes through the floor (1), and discharge any sludge that may have been deposited in the canal.

14. The method as claimed in claim 13, **characterized in that** the speed of the flow in the canals (2) during cleaning is between 200 and 1000 m/h, depending on the nature of the sludge.
